# EUROPEAN PATENT APPLICATION

(11) **EP 1 356 924 A1**
(43) Date of publication of application: **29.10.2003**
(21) Application number: 03251260.0
(22) Date of filing: 03.03.2003
(51) Int. Cl.: B32B 1/08, H02G 15/18, B32B 27/30

(54) **Flame-retardant heat-shrinkable tube and method of making the same**

(30) Priority: 26.04.2002 JP 2002125395
(71) Applicant: Sumitomo Electric Fine Polymer, Inc., Sennan-gun, Osaka 590-0451 (JP)
(72) Inventor: Moriuchi, Kiyoaki, c/o Sumitomo Electric Ind. Ltd., Osaka-shi, Osaka (JP); Hayashi, Hiroshi, c/o Sumitomo Electric Ind. Ltd., Osaka-shi, Osaka (JP); Kishimoto, Tomoyoshi, Kumatori-cho, Sennan-gun, Osaka (JP); Azuma, Shuuji, Kumatori-cho, Sennan-gun, Osaka (JP); Hori, Kiyosei, Kumatori-cho, Sennan-gun, Osaka (JP)
(74) Representative: Cross, Rupert Edward Blount

(57) **Abstract**

A halogen-free flame-retardant heat-shrinkable tube with high expanding property having the surface with excellent marking property and printability is provided. The tube includes an outer layer mainly made of polyolefin resin blended at the ratio of 100 parts by weight of a polyolefin resin and 100 to 250 parts by weight of metal hydroxide or that which is surface-treated with a silane coupling agent and an inner layer mainly made of polyolefin resin blended at the ratio of 100 parts by weight of a polyolefin resin and 100 to 250 parts by weight of metal hydroxide which is surface-treated with an anionic surface-active agent.

## Description

The present invention relates to a halogen-free flame-retardant heat-shrinkable tube for use in internal wiring of electronic apparatuses or the like, the tube having superior marking property and printability. The present invention also relates to a method for making the tube.

Heat-shrinkable tubes used inside electronic apparatuses must be highly flame retardant. For example, the tubes must pass the VW-1 vertical flame test or all-tubing flame test of Underwriters Laboratories (UL) Standards. In order to meet these standards, most heat-shrinkable tubes have been made from polyvinyl chloride (PVC). However, with an increasing concern of environmental problems, non-PVC tubes, i.e., heat-shrinkable tubes made of a halogen-free flame-retardant material, are now being developed.

Japanese Unexamined Patent Application Publication No. 63-77958 recited a halogen-free flame-retardant heat-shrinkable tube made from a resin composition comprising a thermoplastic resin filled with metal hydroxide. The patent application is directed to a heat-shrinkable tube that can be produced by cross-linking through irradiation of electron beams onto a tube product made from a flame-retardant resin composition, which is prepared by blending magnesium hydroxide into a polyolefin resin such as ethylene vinyl acetate (EVA) copolymer, and by expanding the resulting product in the radical direction.

Japanese Unexamined Patent Application Publication No. 2002-52632 discloses a multi-layered heat-shrinkable tube. The multi-layered heat-shrinkable tube includes an outermost layer composed of polyolefin mainly containing polypropylene-based polymer and an innermost layer mainly composed of cyclic-olefin-based polymer such that it has good expansion property, extrusion property, flexibility, heat-shrinkable property, and heat resistance. Those properties are important for heat-shrinkable tubes.

Recently, heat-shrinkable tubes are increasingly used for wiring inside devices such as personal computers. The heat-shrinkable tubes used for wiring must have letters or figures printed on the surface thereof to distinguish wires from one another. In order to meet such needs, devices for printing various letters and figures, which are input from personal computers, on heat-shrinkable tubes are developed.

The prior art documents described above, however, did not provide flame-retardant heat-shrinkable tubes with high marking property and printability. Japanese Unexamined Patent Application Laid-Open No. 63-77958 contained no description regarding the marking property and the printability of the flame-retardant heat-shrinkable tube. Japanese Unexamined Patent Application Laid-Open No. 2002-52632, which disclosed a multi-layered heat-shrinkable tube that included an outermost layer made of a polypropylene-based resin, had no description as to the marking property and printability of the tube. The marking property and the printability of that tube were hardly sufficient because of its material, and, moreover, no disclosure was made as to the flame-retardant property of the tube.

An object of the present invention is to provide a flame-retardant heat-shrinkable tube having a surface with an improved marking property and printability. To achieve this object, a halogen-free flame-retardant heat-shrinkable tube according to the present invention includes an outer layer, which is mainly composed of polyolefin resin blended at the ratio of 100 parts by weight of a polyolefin resin and 100 to 250 parts by weight of metal hydroxide that is surface-treated with a silane coupling agent, and an inner layer, which is mainly composed of polyolefin resin blended at the ratio of 100 parts by weight of a polyolefin resin and 100 to 250 parts by weight of metal hydroxide that is surface-treated with an anionic surface-active agent, wherein the thickness of the outer layer is 50% or less of the total thickness of the tube. The heat-shrinkable tube of the present invention not only has a high flame-retardant property but also exhibits excellent marking property, printability, and heat-expansion property required during a processing step. Since the heat expansion property directly affects the heat shrinkage, a flame-retardant heat-shrinkable tube with high heat-shrinking property can be obtained according to the present invention.

The flame-retardant heat-shrinkable tube of the present invention includes an inner layer and an outer layer. The inner layer is composed of a compound prepared by blending polyolefin with a metal hydroxide for rendering a flame-retardant property to polyolefin. The metal hydroxide is surface-treated with an anionic surface-active agent in advance. Examples of anionic surface-active agents are fatty acids and fatty acid salts. This compound can exhibit sufficient expansion property during the expanding step. The outer layer is composed of a compound also prepared by blending polyolefin with a metal hydroxide for rendering flame-retardant property to polyolefin. Here, the metal hydroxide is untreated or surface-treated with a silane coupling agent before or during blending. This compound improves the marking property and printability. When these layers are used in combination, the resulting flame-retardant heat-shrinkable tube has excellent marking property and printability and exhibits sufficient expansion property during the heat-expanding step.

Examples of the polyolefin resins that constitute inner and outer layers include known polymers such as polyethylene, ethylene vinyl acetate copolymer (EVA), ethylene-ethyl acrylate copolymer (EEA), ethylene-methyl acrylate copolymer (EMA), and ethylene-methyl methacrylate copolymer (EMMA). The melt flow rate of the polyolefin resin is preferably in the range of 0.1 to 30 so that the tube can obtain sufficient extruding ability and mechanical strength. The above-described polymers may be used without modification or may be modified by acid anhydride or carboxylic acid. The selection of polyolefin can be independently made between the inner layer and the outer layer. However, the inner layer and the outer layer of the present invention preferably contain the same polyolefin so that the affinity between two layers can be enhanced.

Moreover, in order to improve various properties, polymers can be blended, including ethylene propylene-diene terpolymer (EPDM), ethylene-acrylic rubber, thermoplastic elastomer olefin, and styrene block copolymer, provided that such as flame-retardant property and mechanical property. In addition, additives such as antioxidants, lubricants, stabilizers, coloring agents, blowing agents, reinforcing agents, fillers, or multifunctional monomers may be blended.

Examples of the metal hydroxides contained in the inner layer and the outer layer of the present invention include magnesium hydroxide, aluminum hydroxide, and calcium hydroxide. The particle diameter of the metal hydroxide is preferably in the range of 0.5 to 5.0 µm. Since the metal hydroxide is blended independently into the inner layer and the outer layer, the type of metal hydroxide and the blend ratio relative to polyolefin can be adjusted independently between the inner layer and the outer layer. Preferably, the same amount of metal hydroxide relative to polyolefin is blended into the inner layer and the outer layer so as to ensure the flame-retardant property of the entire tube and to enhance the affinity in heat-shrinking property between the inner layer and the outer layer during shrinking. Preferably, the amount of the metal hydroxide blended into the inner and outer layers is in the range of 100 to 250 parts by weight relative to 100 parts by weight of polyolefin resin. At less than 100 parts by weight, the flame retardant property is insufficient. At an amount exceeding 250 parts by weight, the extruding ability and the expanding ability are degraded, and thus the mechanical property during use is degraded. Preferably, the metal hydroxide is magnesium hydroxide that can give excellent extruding ability and expanding ability.

The metal hydroxide to be used in the outer layer is either untreated or surface-treated with a silane coupling agent. Examples of silane coupling agents include acryl-, vinyl-, amino-, and epoxy silane coupling agents. The metal hydroxide may be surface-treated by a spray method or a wet processing method including the steps of dispersing a silane coupling agent in an acetic acid aqueous solution, feeding the metal hydroxide into the resulting solution to prepare a mixture, stirring the mixture, and drying the resulting mixture. The resin composition containing the metal hydroxide, either untreated or surface-treated with a silane coupling agent, has excellent marking property and printability. However, when the shrinkage ratio is 2 to 3, the amount of the metal hydroxide must be reduced, thereby resulting in low flame-retardant property.

The metal hydroxide to be used in the inner layer is surface-treated with an anionic surface-active agent. Examples of anionic surface-active agents include fatty acids such as oleic acid and fatty acid metal salts such as sodium stearate. When a fatty acid is used as the anionic surface-active agent, a spray method is preferably employed. When a fatty acid metal salt is used as the anionic surface-active agent, the wet processing method described above is preferably employed. The resin composition containing metal hydroxide surface-treated with an anionic surface-active agent has low marking property and printability, but has excellent heat-expanding property. Thus, flame-retardant tubes having a shrinkage ratio of 2 to 3 can be manufactured.

In order to simultaneously achieve excellent heat-expanding property of the resin composition for the inner layer and excellent marking property and printability of the resin composition for the outer layer, the ratio of the thickness of the inner layer to the thickness of the outer layer must be controlled. When the thickness of the outer layer is excessively large, the expansion is inhibited. However, the marking property and the printability cannot improve without the outer layer. In other words, the thickness of the outer layer must not be zero to obtain sufficient marking property and printability. The shrinkage ratio is calculated by dividing the inner diameter before heat-shrinking by the inner diameter after heat-shrinking. The workability of flame-retardant heat-shrinkable tubes improves as the shrinkage ratio becomes larger. When the thickness of the outer layer is not more than 50% of the total thickness, satisfactory workability is obtained. When the thickness of the outer layer exceeds 50% of the total thickness, a desired expanding rate cannot be achieved during the expanding step of the manufacturing process: in other words, the shrinkage ratio is not sufficiently large when the tube is to be shrunk by heating for use. Preferably, the heat-shrinkage ratio is 1.5 or more at a heating temperature of 150°C and a heating time of 10 minutes.

The resin composition for use in the outer layer of the flame-retardant heat-shrinkable tube mainly contains a mixture of a selected polyolefin and a metal hydroxide. The metal hydroxide may be untreated or treated with a silane coupling agent. The resin composition for use in the inner layer of the tube mainly contains a mixture of a selected polyolefin and a metal hydroxide surface-treated with an anionic surface-active agent. In preparing these mixtures, a known mixer such as an open-roll mixer, a Banbury mixer, a pressure kneader, or a twin screw mixer may be used. Various polymers and additives for improving the properties of the resulting tube may be added at this stage. The outer-layer resin composition and the inner-layer resin composition prepared as above are each formed into pellets with a pelletizer and, the resulting pellets are placed in separate hoppers. Then, a dual wall tube is manufactured by a melt-extruding method. The dual wall tube is subjected to a crosslinking step with accelerated electron beam irradiation. During this cross-linking step, ionizing radiations such as γ-rays, X-rays, α-rays, or ultraviolet rays may be used instead of an accelerated electron beam. Moreover, during the mixing process a cross-linking agent may be mixed for thermal cross-linking. In the present invention, the use of the accelerated electron beam is particularly preferred. After the step of crosslinking, the resin composition is heated to a temperature above the melting point, and compressed air is introduced into the tube so as to allow the tube to expand in the radial direction. Subsequently, the tube is cooled to set the expanded shape, thereby completing the manufacture of the flame-retardant heat-shrinkable tube.

### EXAMPLES

Examples of the present invention will now be described. In order to confirm the advantages of the present invention, various polymers and additives for improving the characteristics were excluded. Thus, the examples do not limit the scope of the invention.

Table I shows exemplary compounds of resin compositions for making flame-retardant heat-shrinkable tubes of the present invention.

Each compound contained 0.5 parts by weight of oleic amide and 0.5 parts by weight of pentaerythritol tetrakis [3(3,5-di-t-butyl-4-hydroxyphenyl) propionate] relative to 100 parts by weight of polyolefin to improve workability during the extrusion step and to prevent oxidation during the processing step, although this is not described in Table I. Each compound was then mixed in an open-roll mixer set at 150°C. The resulting mixture was pelletized with a sheet pelletizer.

**Table I**

| | Surface-treatment of metal hydroxide | Compound A | Compound B | Compound C | Compound D | Compound E |
|---|---|---|---|---|---|---|
| EVA (VA=25wt. %, MFR=5) | | **100** | **100** | **100** | **100** | **100** |
| Magnesium hydroxide a (*1) | Not performed | **180** | | | | |
| Magnesium hydroxide a | Oleic acid | | **180** | | | |
| Magnesium hydroxide a | Stearic acid | | | **180** | | |
| Magnesium hydroxide a | Amino-silane coupling agent | | | | **180** | |
| Magnesium hydroxide b (*2) | Vinyl-silane coupling agent | | | | | **180** |

| | | | | | | |
|---|---|---|---|---|---|---|
| Notes: *1: medium particle size=0.7 µm, specific surface area (BET)=7 m². | | | | | | |
| *2: medium particle size=1.6 µm, specific surface area (BET)=5 m². | | | | | | |

The resulting pellets were fed into hoppers of a melt-extruding machine (inner layer: 45 mm in diameter, L/D = 24, full-flight type; outer layer: 60 mm in diameter, L/D = 24, full-flight type) according to the inner-outer layer combinations shown in Tables II and III. The pellets were formed into tubes using a cross-head for dual wall extrusion at an extrusion temperature of 160°C. The inner diameter of the tubes was fixed at 6.4 mm. The thicknesses of the inner layer and the outer layer were adjusted at values shown in Tables II and III.

The tubes then underwent a cross-linking step by electron beam irradiation at a dose of 150 kGy and an accelerating voltage of 2 MeV.

The resulting tubes were placed in an air oven set at 160°C and were left to stand for 3 minutes for preheating. Compressed air was fed into the tubes so as to expand the inner diameter of the tubes from 6.4 mm to 13 mm. While maintaining the expanded state, the tubes were removed from the air oven and were cooled by water to keep the expanded shape, which completed the manufacturing process of the heat-shrinkable tubes. The expanding ability of the tubes is shown in Tables II and III. In Tables II and III, tubes that expanded without defects are evaluated as "satisfactory", and tubes that burst or did not expand are evaluated as "defective".

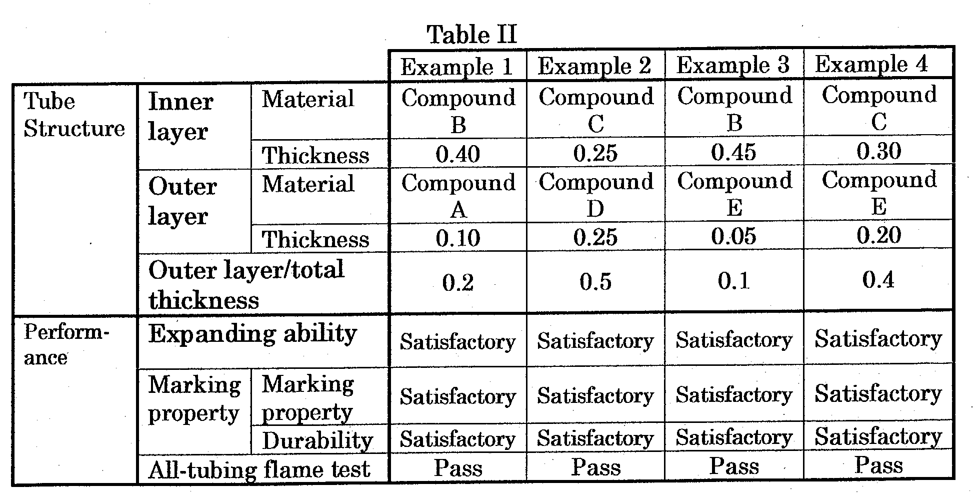

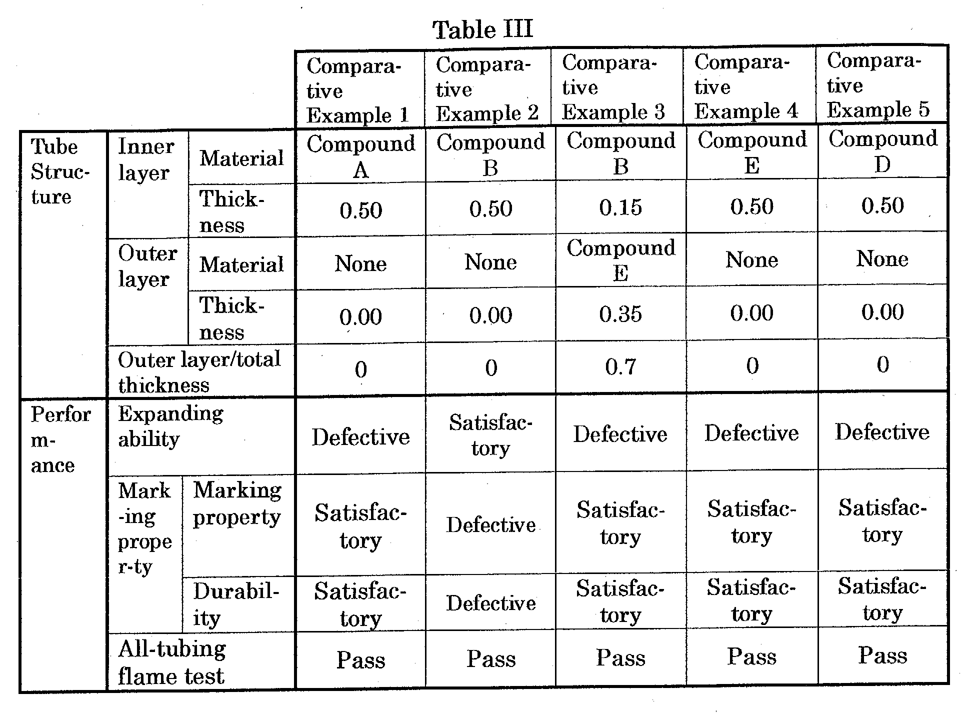

The marking property and the flame retardant property of the tubes shown in Tables II and III were evaluated. An ink-ribbon-type print-marking system (manufactured by Sumitomo Electric Interconnect Products, Inc.) was used in the evaluation.

The marking property immediately after printing was evaluated according to MIL-M-81531. Printed characters were observed with the naked eye from a distance of 14 inches. Tubes having characters that were clearly legible and uniform and that could easily be recognized as an accurate reproduction of the letters and figures of the print roller were evaluated as "good", and tubes other than these were evaluated as "poor". The durability of the printing was also evaluated according to MIL-M-81531. That is, 20 eraser rubs were applied to the printed characters with hard hand pressure and were observed with the naked eye from a distance of 14 inches. Tubes having characters that were clearly legible and uniform and that could easily be recognized as an accurate reproduction of the letters and figures of the print roller were evaluated as "good", and tubes other than these were evaluated as "poor".

The flame retardant property was evaluated as follows. An iron bar having an outer diameter of 6.5 mm was covered with a tube having an inner diameter of 13 mm. The bar and the tube were kept in an air oven at 150°C for 10 minutes so as to allow the tube to adhere onto the bar by heat-shrinking. Three of such samples were prepared for each example and were subjected to the all-tubing flame test (UL Standard Subject 758) to evaluate their performance. A tube was evaluated as "fail" if one or more of these three samples exhibited indicator flag burning or surgical cotton burning, or continued to flame longer than 60 seconds.

The results are shown in Tables II and III. The examples shown in Table II are those of the present invention, and Table III shows comparative examples. As shown in Table II, the flame-retardant heat-shrinkable tubes of the present invention exhibited excellent expanding ability and marking property and had high flame-retardant property. The comparative examples shown in Table III had poor expanding ability when they had a single-layer structure (Comparative Examples 1, 4, and 5) in which only a layer corresponding to the outer layer of the present invention was provided. Moreover, the comparative examples having a single-layer structure (Comparative Example 2) in which only one layer corresponding to the inner layer of the present invention was provided had poor marking property. Comparative Example 3 having a double-layer structure did not expand to a predetermined diameter, i.e., 13 mm, during the heat-expanding step because the ratio of the thickness of the outer layer to the total thickness was more than 0.5, resulting in insufficient heat-shrinking property.

As described above, the flame-retardant heat-shrinkable tube of the present invention is halogen free, has sufficient flame retardant property, high heat-shrinking ratio, and superior marking property and printability. Thus, the heat-shrinkable tubes of the present invention are very useful for identification in wiring.

## Claims

1. Ahalogen-free flame-retardant heat-shrinkable tube comprising:
an outer layer mainly made of polyolefin resin blended at the ratio of 100 parts by weight of a polyolefin resin and 100 to 250 parts by weight of metal hydroxide or metal hydroxide that is surface-treated with a silane coupling agent; and
an inner layer mainly made of polyolefin resin blended at the ratio of 100 parts by weight of a polyolefin resin and 100 to 250 parts by weight of metal hydroxide which is surface-treated with an anionic surface-active agent,
wherein the thickness of the outer layer is 50% or less of the total thickness of the tube.

2. A halogen-free flame-retardant heat-shrinkable tube according to claim 1, wherein the metal hydroxide is magnesium hydroxide.

3. A halogen-free flame-retardant heat-shrinkable tube according to claim 1 or 2, wherein the shrinkage ratio is 1.5 or more at a heating temperature of 150°C and a heating time of 10 minutes.

4. A method for making the flame-retardant heat-shrinkable tube according to claim 1, comprising the steps of:
separately preparing a compound for making the outer layer and a compound for making the inner layer;
pelletizing the compounds to make outer-layer pellets and inner-layer pellets, respectively;
forming the inner-layer and outer-layer pellets into a dual wall tube by a melt-extruding process;
subjecting the resulting dual wall tube to ionizing-radiation crosslinking; and
heat expanding the resulting dual wall tube.

5. An electronic apparatus comprising a halogen-free flame retardant heat-shrinkable tube as defined in any of claims 1 to 3.
